# EUROPÄISCHE PATENTSCHRIFT

(11) **EP 2 699 817 B1**
(45) Veröffentlichungstag und Bekanntmachung des Hinweises auf die Patenterteilung: **08.06.2016**
(21) Anmeldenummer: 12727251.6
(22) Anmeldetag: 05.04.2012
(51) Int. Cl.: F16D 13/75

(54) **KUPPLUNGSVORRICHTUNG**
CLUTCH DEVICE
EMBRAYAGE

(30) Priorität: 20.04.2011 DE 102011018369
(43) Veröffentlichungstag der Anmeldung: 26.02.2014
(73) Patentinhaber: Schaeffler Technologies AG & Co. KG, 91074 Herzogenaurach (DE)
(72) Erfinder: VILKNER, Martin, 77886 Lauf (DE)
(86) Internationale Anmeldenummer: PCT/DE2012/000365
(87) Internationale Veröffentlichungsnummer: WO 2012/142994

(56) Entgegenhaltungen:
- DE-A1- 10 025 532
- DE-A1- 19 960 641
- DE-A1-102008 031 953
- DE-A1-102009 029 499
- DE-A1-102010 006 054
- DE-A1-102010 006 055
- GB-A- 585 264
- US-B1- 6 619 637

## Beschreibung

Die vorliegende Erfindung betrifft eine Kupplungsvorrichtung gemäß dem Oberbegriff des Patentanspruchs 1. Darüber hinaus betrifft die vorliegende Erfindung eine Rollfeder, die für eine Verschleißnachstelleinrichtung der Kupplungsvorrichtung ausgebildet ist.

Aus der DE 10 2008 031 953 A1 ist eine Kupplungsvorrichtung, die zwei Drehmomentübertragungseinrichtungen als reibschlüssige Teilkupplungen aufweist, wobei jede der Drehmomentübertragungseinrichtungen eine mit einem Gehäusebauteil drehfest verbundene Druckplatte, eine drehfest und in axialer Richtung gegenüber der Druckplatte verlagerbare Anpressplatte und eine reibschlüssig zwischen der Druckplatte und der Anpressplatte verspannbare Kupplungsscheibe aufweist. Darüber hinaus weist die Kupplungsvorrichtung für jede der Drehmomentübertragungseinrichtungen eine Verschleißnachstelleinrichtung auf. Jede der Verschleißnachstelleinrichtungen besitzt einen in Umfangsrichtung mittels mehrerer gewickelter Rollfedern verdrehbaren Rampenring zur Sensierung und zum Ausgleich eines verschleißbedingten Axialspiels zwischen dem Gehäusebauteil und der Anpressplatte. Jeder der Rollfedern ist einerseits rampenringseitig und andererseits gehäusebauteilseitig montiert, wobei die Möglichkeit besteht, dass sich die Rollfeder beim kurzzeitigen Blockieren oder Verklemmen der Rollfeder oder bei Drehzahlschwankungen im Betrieb der Kupplungsvorrichtung vom Rampenring löst.

Ferner ist aus der DE 10 2010 006 054 A1 eine Kupplungsvorrichtung gemäß dem Oberbegriff des Patentanspruchs 1 bekannt.

Es ist Aufgabe der vorliegenden Erfindung, eine Kupplungsvorrichtung und eine Rollfeder anzugeben, durch die verhindert werden kann, dass sich die Rollfeder von einem Rampenring der Kupplungsvorrichtung löst.

Erfindungsgemäß gelöst wird diese Aufgabe durch eine Kupplungsvorrichtung gemäß Patentanspruch 1 mit zumindest einer Drehmomentübertragungseinrichtung, die zumindest eine mit einem Gehäusebauteil drehfest verbundene Druckplatte, eine drehfest und in axialer Richtung gegenüber der Druckplatte verlagerbare Anpressplatte und eine reibschlüssig zwischen der Druckplatte und der Anpressplatte verspannbare Kupplungsscheibe aufweist, und mit zumindest einer Verschleißnachstelleinrichtung, die zumindest einen in Umfangsrichtung mittels zumindest einer gewickelten Rollfeder verdrehbaren Rampenring zur Sensierung und zum Ausgleich eines verschleißbedingten Axialspiels zwischen dem Gehäusebauteil und der Anpressplatte aufweist, wobei die Rollfeder einerseits rampenringseitig und andererseits gehäusebauteilseitig montiert ist. Durch eine rollfederseitig vorgesehene Einhängsicherung, die zwischen dem Rampenring und der Rollfeder vorgesehen ist, kann ein Lösen der Rollfeder vom Rampenring beim kurzzeitigen Blockieren oder Verklemmen der Rollfeder oder bei Drehzahlschwankungen im Betrieb der Kupplungsvorrichtung verhindert werden. Die Einhängsicherung ist in einem Bereich einer Befestigungsöffnung der Rollfeder vorgesehen. Mittels der Befestigungsöffnung ist die Rollfeder an einem rampenringseitigen Vorsprung eingehängt.

Bevorzugte Ausführungsbeispiele der Kupplungsvorrichtung sind in den abhängigen Ansprüchen dargelegt.

Als Kupplungsvorrichtung können einfache Reibungskupplungen, beispielsweise als Anfahr- und Trennkupplung zwischen der Brennkraftmaschine und dem Getriebe eines Kraftfahrzeugs, oder Doppelkupplungen mit zwei integrierten Reibungskupplungen als Drehmomentübertragungseinrichtungen, beispielsweise für Doppelkupplungsgetriebe mit zwei mittels der Reibungskupplungen mit einer Brennkraftmaschine koppelbaren Teilgetrieben oder einem Getriebeantrieb und einem Nebenantrieb für Arbeitsgeräte zum Einsatz kommen. Als weitere vorteilhafte Ausgestaltungen können die Reibungskupplungen für das Ankuppeln weiterer treibender oder getriebener Wellen von Funktionseinheiten wie Nebenabtrieben, Elektromaschinen und/oder zusätzlichen Getriebeeingangswellen vorgesehen sein. Auf ihrer Eingangsseite kann die Kupplungsvorrichtung beispielsweise mit einer Dämpfungseinrichtung zum Dämpfen von Torsionsschwingungen, beispielsweise mittels eines Zweimassenschwungrads, verbunden sein oder darin integriert sein. Alternativ oder zusätzlich kann die Kupplungsvorrichtung zum Dämpfen von Axial- und/oder Taumelschwingungen axial elastisch gestaltete Bauteile enthalten.

Die Kupplungsvorrichtung kann zwei eine Doppelkupplung für ein Doppelkupplungsgetriebe bildende Reibungskupplungen als Drehmomentübertragungseinrichtungen aufweisen, wobei zumindest eine Reibungskupplung eine Verschleißnachstelleinrichtung mit zumindest einer Rollfeder aufweist. Es versteht sich, dass bei Verwendung einer Doppel- oder Mehrfachkupplung als Kupplungsvorrichtung, der Verschleiß mehrerer oder aller Drehmomentübertragungseinrichtungen mit jeweils einer der vorgeschlagenen Verschleißnachstelleinrichtungen kompensiert werden kann.

Die Art der Drehmomentübertragungseinrichtung bzw. der Reibungskupplung hängt von der Anwendung ab. Es kann sich um eine sogenannte gedrückte oder gezogene Reibungskupplung handeln, die zwangsweise geöffnet oder zwangsweise geschlossen werden kann. Je nach Art der verwendeten Reibungskupplung kann die Nachstellung eines Verschleißes daher beispielsweise bei geöffneter, bei geschlossener oder im geöffneten oder geschlossenen Zustand mit Überweg beaufschlagter Reibungskupplung oder nach Speicherung des nachzustellenden Wegs bei der nächsten Betätigung der Reibungskupplung erfolgen.

Allen Verschleißnachstelleinrichtungen gemeinsam ist eine Rampeneinrichtung, die in Umfangsrichtung entgegen der gespeicherten Energie zumindest eines Energiespeichers gegenüber dem Kupplungsgehäuse bzw. einem Gehäusebauteil, das mit der Kurbelwelle der Brennkraftmaschine und der Druckplatte rotiert, in einer Weise verdreht werden kann, dass der zu kompensierende Weg durch die nach Verdrehung erhöhte Rampenhöhe am Kupplungsgehäuse oder einem mit diesem verbundenen Bauteil zur Anlage kommt. Die Rampen können beispielsweise in Form eines Rampenrings über den Umfang angeordnet sein, wobei ein hierzu korrespondierender Rampenring mit gegenläufigen Rampen am Kupplungsgehäuse vorgesehen oder mit diesem drehfest verbunden sein kann.

Ein zur Betätigung der Drehmomentübertragungseinrichtung bzw. der Reibungskupplung verwendetes Hebelelement stützt sich am Kupplungsgehäuse bzw. an einem Gehäusebauteil ab und verlagert bei Betätigung die Anpressplatte in axialer Richtung. Das Hebelelement kann je nach Anforderung der Art der Reibungskupplung - zwangsweise geöffnet oder geschlossen, gezogen oder gedrückt - ein einarmiger oder zweiarmiger Hebel sein, der radial außen bzw. zwischen einer radial außen vorgesehenen Anlagefläche für die Anpressplatte und einem radial innen liegenden Endabschnitt die Anpressplatte beaufschlagt und bei axialer Bewegung der radialen Innenseite mit einem entsprechenden Hebelverhältnis die Druckplatte axial verlagert und damit die Reibungskupplung betätigt. Anstatt eines starren Hebels können beispielsweise scheibenförmige, radial innen segmentierte Bauteile, sogenannte Tellerfedern, verwendet werden, die über elastische Fähigkeiten in axialer Richtung verfügen.

Für die Rollfeder wird bevorzugt elastisches Bandmaterial, vorzugsweise Stahl, verwendet. Dieses Bandmaterial kann einlagig verwendet werden, kann jedoch auch in zwei oder mehreren Lagen verwendet werden, wobei die einzelnen Lagen, vorzugsweise die Enden der einzelnen Lagen, miteinander verbunden sind. Die Verbindung erfolgt vorzugsweise stoffschlüssig, insbesondere durch Schweißen oder Löten.

Durch das elastische Bandmaterial kann bei einer hohen Federsteifigkeit die Wicklungslänge des aufgewickelten Bandmaterials verwendet werden. Dies hat insbesondere den Vorteil, dass eine entsprechend ausgelegte Wicklungslänge einen großen Verdrehwinkel der Rampeneinrichtung zulässt. Ein auf diese Art verwendeter Energiespeicher in Form einer Rollfeder kann durch Aufwickeln des gerollten Federpakets, durch Ziehen oder Drücken, die Rampeneinrichtung verdrehen, wobei es vorteilhaft sein kann, wenn bei gedrückter Ausführung das bereits aufgewickelte Federband abgestützt wird und damit vor Biegen oder Knicken geschützt wird.

Besonders vorteilhaft kann eine Kupplungsvorrichtung sein, bei der mehrere über den Umfang verteilte Rollfedern in außerhalb der Rampeneinrichtung über den Umfang verteilten, in das Kupplungsgehäuse eingebrachten Aussparungen eingelegt sind und an der Rampeneinrichtung, beispielsweise einem Rampenring, befestigt sind. Vorteilhaft kann ein Einhaken von umgelegtem Bandmaterial in Ausnehmungen des Rampenrings sein. Ebenso kann der Rampenring Vorsprünge aufweisen, in die die Rollfedern mittels am freien Ende der Rollfedern vorgesehenen Befestigungsöffnungen eingehängt werden. Es versteht sich, dass die Befestigung oder Fixierung auch an einem mit dem Rampenring verbundenen Bauteil erfolgen kann.

Die Kupplungsvorrichtung kann eine oder mehrere Verschleißnachstelleinrichtungen aus jeweils zwei Rampeneinrichtungen enthalten, die vorzugsweise in axialer Richtung zwischen dem Gehäusebauteil und der Anpressplatte vorgesehen sind. Eine dieser Rampeneinrichtungen ist zur Sensierung des Verschleißwegs vorgesehen, während die andere Rampeneinrichtung zur Nachstellung des sensierten Verschleißwegs vorgesehen ist, wobei zumindest eine der beiden Rampeneinrichtungen zumindest eine gewickelte Rollfeder als Energiespeicher aufweist. Es versteht sich, dass weitere Rampenringe oder anders ausgestattete Rampeneinrichtungen unabhängig von ihrer Funktion in einer Verschleißnachstelleinrichtung in vorteilhafter Weise von den vorgeschlagenen Rollfedern in allen beschriebenen Formen verdreht werden können.

Die Rollfeder als Energiespeicher der Verschleißnachstelleinrichtung ist somit einerseits rampenringseitig und andererseits gehäusebauteilseitig montiert, wobei zwischen dem Rampenring und der Rollfeder die dem Rampenring oder der Rollfeder zuzuordnende Einhängsicherung vorgesehen ist. Die Einhängsicherung ist ausgebildet, mechanisch, das heißt insbesondere durch Kraftschluss und/oder Formschluss, zu verhindern, dass sich die Rollfeder vom Rampenring der Kupplungsvorrichtung löst.

Vorzugsweise weist die Rollfeder einen Windungsabschnitt mit zumindest einer Federwindung, die im Bereich der gehäusebauteilseitigen Befestigung der Rollfeder vorgesehen ist, und einen im Wesentlichen nicht aufgewickelten Bandabschnitt, in den der Windungsabschnitt in Richtung der rampenseitigen Befestigung der Rollfeder übergeht, auf. Der Windungsabschnitt besteht in vorteilhafter Weise aus mehreren Federwindungen, die beispielsweise um eine Federhülse gewickelt sind. In einem Befestigungsbereich des Kupplungsgehäuses bzw. des Gehäusebauteils ist der Windungsabschnitt der Rollfeder beispielsweise durch ein Niet, insbesondere ein Hammerkopfniet, einen Stufenbolzen oder eine Schraube mit dem Kupplungsgehäuse bzw. dem Gehäusebauteil verbunden. Jedoch ist auch eine schwimmende Lagerung des Windungsabschnitts, insbesondere ohne Federhülse, in einem entsprechend ausgebildeten Befestigungsbereich des Kupplungsgehäuses bzw. des Gehäusebauteils möglich.

Vorzugsweise ist die Einhängsicherung elastisch ausgebildet, so dass sie nach der Montage der Rollfeder am Rampenring, während der die Einhängsicherung in ihrem elastischen Bereich verformt worden ist, zumindest teilweise wieder in ihren Ausgangszustand zurückkehrt.

Insbesondere ist es von Vorteil, wenn die Einhängsicherung als Schnappsicherung ausgebildet ist. Vorzugsweise schnappt die als Schnappsicherung ausgebildete Einhängsicherung in ihren Ausgangszustand zurück, nachdem die Rollfeder rampenringseitig montiert worden ist.

Gemäß einem weiteren bevorzugten Ausführungsbeispiel ist die Einhängsicherung einteilig mit der Rollfeder ausgebildet ist. Wie die gesamte Rollfeder ist auch die Einhängsicherung vorzugsweise aus elastischem Bandmaterial, insbesondere vorzugsweise aus Stahl, hergestellt.

Vorzugsweise mittels der Befestigungsöffnung ist ein freies Ende eines Bandabschnitts der Rollfeder am rampenringseitigen Vorsprung eingehängt. Der rampenringseitige Vorsprung ist vorzugsweise im Wesentlichen hakenförmig ausgebildet. Die Einhängsicherung begrenzt die Befestigungsöffnung vorzugsweise in Umfangsrichtung der Kupplungsvorrichtung.

Vorzugsweise ist die Einhängsicherung zwischen einem gehäusebauteilseitig montierten Windungsabschnitt der Rollfeder und der Befestigungsöffnung angeordnet. Hierdurch ist es möglich, dass die Einhängsicherung nicht durch den hakenförmigen Vorspruch ausgeleiert oder verschlissen wird, wenn die Rollfeder auf Zug vorgespannt ist.

Gemäß einem weiteren bevorzugten Ausführungsbeispiel ist die Länge der Befestigungsöffnung kleiner als die maximale Länge des hakenförmigen Vorsprungs in Umfangsrichtung der Kupplungsvorrichtung. Die Gesamtlänge der Befestigungsöffnung und der Einhängsicherung ist zumindest gleich, vorzugsweise größer als die maximale Länge des hakenförmigen Vorsprungs in Umfangsrichtung der Kupplungsvorrichtung, so dass der hakenförmige Vorsprung auf einfache Art und Weise eingehängt werden kann und anschließende durch die Einhängsicherung gegen Aushängen gesichert werden kann. Insbesondere verhindert die Aushängsicherung, dass der in Umfangsrichtung längste Abschnitt des hakenförmigen Vorsprungs - der eigentliche Haken - sich unter Krafteinwirkung in Umfangsrichtung selbsttätig aus der kürzeren Befestigungsöffnung aushängen kann.

Weiterhin ist es von Vorteil, wenn die Einhängsicherung zumindest eine Zunge aufweist, die einteilig mit dem Bandabschnitt der Rollfeder ausgebildet ist. Die Zunge weist eine Kante auf, die die Befestigungsöffnung der Rollfeder in Umfangsrichtung der Kupplungsvorrichtung begrenzt. Somit grenzt die Einhängsicherung, vorzugsweise die Zunge der Einhängsicherung, unmittelbar an die Befestigungsöffnung an. Insbesondere ist es von Vorteil, wenn sowohl die Befestigungsöffnung als auch die Einhängsicherung bzw. die Zunge der Einhängsicherung im Bandabschnitt der Rollfeder, das heißt im nicht gewundenen Abschnitt der Rollfeder, ausgebildet sind.

Vorzugsweise ist zwischen der Zunge und der übrigen Rollfeder ein Knickbereich vorgesehen, durch den die Zunge, vorzugsweise elastisch, in ihren Ausgangszustand zurückschnappt, nachdem der hakenförmige Vorsprung die Befestigungsöffnung passiert hat. Der Knickbereich ist vorzugsweise in Umfangsrichtung oder in axialer Richtung der Kupplungsvorrichtung zwischen der Zunge und der übrigen Rollfeder vorgesehen, so dass die Zunge mittels des Knickbereichs in Unfangsrichtung oder in axialer Richtung er Kupplungsvorrichtung an der übrigen Rollfeder, insbesondere am Bandabschnitt, befestigt ist bzw. aus der übrigen Rollfeder, insbesondere aus dem Bandabschnitt, vorspringt.

Die vorgenannte Aufgabe wird ferner erfindungsgemäß gelöst durch eine Rollfeder gemäß Patentanspruch 10 mit einem Windungsabschnitt, der zumindest eine Federwindung aufweist und in einen Bandabschnitt übergeht, wobei der Bandabschnitt im Bereich eines freien Endes zumindest eine Befestigungsöffnung aufweist, in die ein im Wesentlichen hakenförmiger Vorsprung einhängbar ist und durch eine im Wesentlichen zungenförmige Einhängsicherung gegen Aushängen sicherbar ist. IDie Rollfeder ist für den Einsatz in einer Verschleißnachstelleinrichtung einer zuvor genannten Kupplungsvorrichtung geeignet und ausgebildet.

Vorzugsweise wird für die Rollfeder elastisches Bandmaterial, vorzugsweise Stahl, verwendet. Dieses Bandmaterial kann einlagig verwendet werden, kann jedoch auch in zwei oder mehreren Lagen verwendet werden, wobei die einzelnen Lagen, vorzugsweise die Enden der einzelnen Lagen, miteinander verbunden sind. Die Verbindung erfolgt vorzugsweise stoffschlüssig, insbesondere durch Schweißen oder Löten.

Die vorliegende Erfindung wird nachfolgend anhand von bevorzugten Ausführungsbeispielen in Verbindung mit den zugehörigen Figuren näher erläutert. In diesen zeigen:
- Figur 1: einen Halbschnitt durch ein Ausführungsbeispiel einer Kupplungsvorrichtung,
- Figur 2: eine Explosionsansicht der Kupplungsvorrichtung aus Figur 1,
- Figur 3: eine Detailansicht eines Rampenrings der Kupplungsvorrichtung aus Figur 1 mit einer eingehängten Rollfeder in einer Draufsicht,
- Figur 4: die Rollfeder aus Figur 3 in einem nicht eingehängten Zustand in einer Draufsicht, und
- Figur 5: eine perspektivische Ansicht der Rollfeder aus Figur 3.

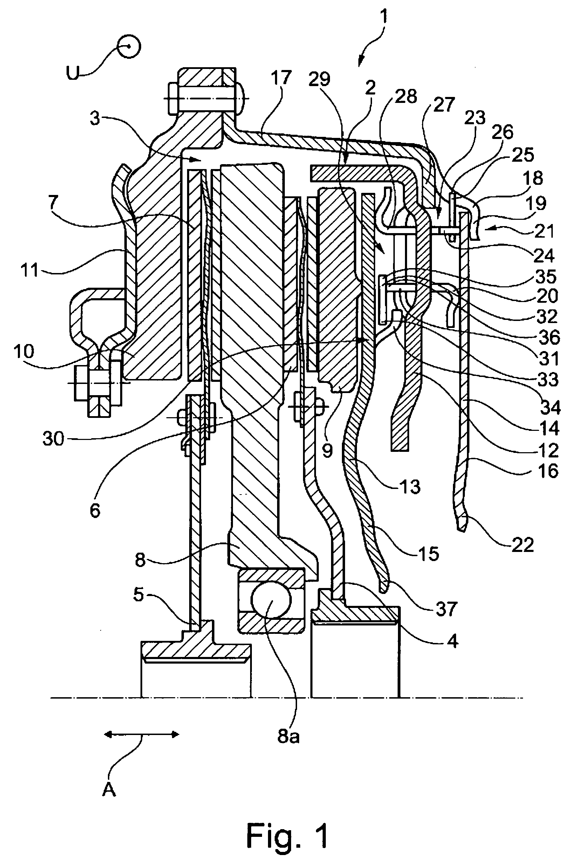

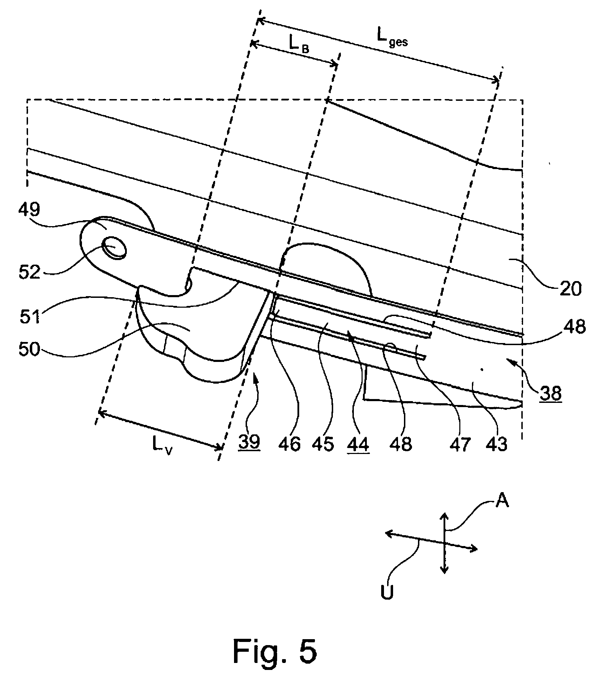

Die Figuren 1 bis 5 betreffen ein bevorzugtes Ausführungsbeispiel einer Kupplungsvorrichtung 1 für ein Kraftfahrzeug. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweisen. Ebenso betrifft die vorliegende Beschreibung ein Ausführungsbeispiel einer Rollfeder 38 für die besagte Kupplungsvorrichtung 1.

Das in Figur 1 dargestellte Ausführungsbeispiel einer Kupplungsvorrichtung 1 umfasst zwei Drehmomentübertragungseinrichtungen 2, 3, die im ausgerückten, also geöffneten Zustand dargestellt sind. Vorzugsweise handelt es sich bei den Drehmomentübertragungseinrichtungen 2, 3 um reibschlüssige Teilkupplungen, so dass die Kupplungsvorrichtung 1 vorzugsweise als Doppelkupplung ausgebildet ist. Die Kupplungsvorrichtung 1 weist ferner zwei Kupplungsscheiben 4, 5 auf, die mit unterschiedlichen Getriebeeingangswellen verbindbar sind, wobei das Getriebe, das diese Wellen aufweist, in vorteilhafter Weise ein Lastschaltgetriebe bilden kann, das zwei Teilgetriebe aufweisen kann.

Die Kupplungsscheiben 4, 5 tragen radial außen Reibbeläge 6, 7, die in axialer Richtung A zwischen einer den beiden Drehmomentübertragungseinrichtungen 2, 3 gemeinsamen Druckplatte 8 und einer der jeweiligen Drehmomentübertragungseinrichtungen 2, 3 zugeordneten Anpressplatte 9, 10 einspannbar sind. Die Druckplatte 8 bildet einen Bestandteil eines Schwungrads, das mit einer Brennkraftmaschine verbunden ist. Die Druckplatte 8 ist über in axiale Richtung A verlaufende Bereiche, die hier nicht näher dargestellt sind, mit einer Antriebsplatte bzw. einem Antriebskorb 11 verbunden. Dieser kann als Mitnehmerring ausgebildet sein. Die axial verlaufenden Bereiche, die eine Verbindung zwischen den Druckplatte 8 und ihrem Antriebskorb 11 herstellen, können entweder an der Druckplatte 8 oder am Antriebskorb 11 angeformt sein oder aber auch an beiden Teilen zumindest teilweise vorgesehen sein. Der Antriebskorb 11 kann entweder nach Art eines Drehmomentwandlers mit einer zum Beispiel an der Kurbelwelle des Antriebsmotors vorgesehenen Antriebsplatte verschraubbar sein oder aber mit einem motorseitig angeordneten Antriebselement über eine axiale Steckverbindung verbindbar sein.

Die Druckplatte 8 ist über eine Lagerung 8a getriebeseitig gelagert und zumindest in einer Axialrichtung festgelegt, um die zumindest für eine der Drehmomentübertragungseinrichtungen 2, 3 erforderlichen Schließkräfte in axialer Richtung A abzufangen. Die Druckplatte 8 kann also auf einer Getriebeeingangswelle gelagert bzw. in axialer Richtung A abgestützt sein. Sie kann jedoch auch in Abwandlung dieser Lehre auf einem mit dem Getriebegehäuse fest verbundenen Abstützstutzen bzw. Abstützrohr aufgenommen und in axialer Richtung A abgestützt sein.

Wie aus Figur 1 erkennbar ist, besitzen die Kupplungsscheiben 4, 5 in axialer Richtung A zwischen ihren beiden ringförmigen Reibbelägen 6, 7 eine Belagfederung, die einen progressiven Aufbau und Abbau des von den Drehmomentübertragungseinrichtungen 2, 3 übertragbaren Drehmoments über zumindest einen Teilbereich des Betätigungswegs gewährleisten.

Die zur ersten Drehmomentübertragungseinrichtung 2 gehörende erste Anpressplatte 9 ist mittelbar oder unmittelbar, vorzugsweise über blattfederartige Elemente, mit der Druckplatte 8 drehfest, jedoch begrenzt in axialer Richtung A verlagerbar, verbunden. Die zur zweiten Drehmomentübertragungseinrichtung 3 gehörende zweite Anpressplatte 10 ist in ähnlicher Weise mit der Druckplatte 8 antriebsmäßig gekoppelt. An der Druckplatte 8 ist ein Gehäusebauteil 12 befestigt, das hier als Blechdeckel ausgebildet ist. In axialer Richtung A beidseits dieses Gehäusebauteils 12 sind in ringförmiger Anordnung Hebelelemente 13, 14 vorgesehen, mittels derer die jeweils zugeordnete Drehmomentübertragungseinrichtung 2, 3 betätigbar ist.

Die Hebelelemente 13, 14 können jeweils ein ringartiges Bauteil bilden, das tellerfederähnliche Eigenschaften aufweist, also federnd in seiner Konizität veränderbar ist. Im Folgenden werden die jeweils zu einem ringartigen Bauteil zusammengefassten ersten und zweiten Hebelelemente 13, 14 jeweils als erste und zweite Hebelfedern 15, 16 bezeichnet. Diese Hebelfedern 15, 16 besitzen vorzugsweise jeweils eine Federeigenschaft, die gewährleistet, dass sich diese tendenzmäßig in eine kegelstumpfförmige Position aufstellen, die einem geöffneten Zustand der Drehmomentübertragungseinrichtungen 2, 3 entspricht.

Die zweite Anpressplatte 10 trägt Zugmittel 17, die sich in axialer Richtung A erstrecken und an ihrem der zweiten Anpressplatte 10 abgewandten Ende 18 eine Schwenklagerung bzw. Anlagefläche 19 tragen, an der die zur zweiten Drehmomentübertragungseinrichtung 3 gehörende zweite Hebelfeder 16 kippbar bzw. verschwenkbar abgestützt ist. Bei dem dargestellten Ausführungsbeispiel ist die Anlagefläche 19 einstückig mit den Zugmitteln 17 ausgebildet und durch einen radial nach innen gerichteten, ringförmigen Bereich gebildet.

Die Zugmittel 17 können durch einzelne in Umfangsrichtung U, vorzugsweise gleichmäßig verteilte, hakenartige Bauteile gebildet sein. In vorteilhafter Weise können diese Zugmittel 17 jedoch auch zu einem, vorzugsweise aus Blech hergestellten, Bauteil zusammengefasst sein, das einen, vorzugsweise geschlossenen, ringförmigen Bereich besitzt, von dem aus mehrere axiale Schenkel ausgehen können, die mit der zweiten Anpressplatte 10 fest verbunden sind.

Radial innerhalb der Anlagefläche 19 ist die zweite Hebelfeder 14 an einer Rampeneinrichtung in Form eines ringförmigen, ersten Rampenrings 20 abgestützt. Der ringförmige, erste Rampenring 20 ist in axialer Richtung A zwischen dem Gehäusebauteil 12 und der zweiten Hebelfeder 16 eingespannt und bildet einen Bestandteil einer ersten Verschleißnachstelleinrichtung 21, mittels der zumindest der an den zur zweiten Drehmomentübertragungseinrichtung 3 gehörenden zweiten Reibbelägen 7 auftretende Verschleiß wenigstens teilweise automatisch ausgeglichen werden kann. Zum Schließen der zweiten Drehmomentübertragungseinrichtung 3 werden radial innere, erste Spitzen 22 der zweiten Hebelfeder 16 mit Bezug auf Figur 1 nach links beaufschlagt. Hierfür ist ein die Schließkraft in die zweite Drehmomentübertragungseinrichtung 3 einleitendes Betätigungselement, wie zum Beispiel ein Betätigungslager vorgesehen, das nicht näher dargestellt ist. Dieses Betätigungselement bildet einen Bestandteil eines Betätigungssystems, das als pneumatisches, hydraulisches, elektrisches oder mechanisch betätigtes Betätigungssystem ausgebildet sein kann oder aber eine Kombination der erwähnten Betätigungsmöglichkeiten aufweist, also beispielsweise als elektrohydraulisches Betätigungssystem ausgebildet ist.

Die die Drehmomentübertragung und die axiale Verlagerbarkeit der zweiten Anpressplatte 10 gewährleistenden Federmittel, wie insbesondere Blattfedern, die in an sich bekannter Weise die Druckplatte 8 und die zweite Anpressplatte 10 miteinander verbinden, besitzen vorzugsweise eine definierte axiale Vorspannung, die gewährleistet, dass die zweite Anpressplatte 10 in Öffnungsrichtung der zweiten Drehmomentübertragungseinrichtung 3 beaufschlagt wird. Dies bedeutet, dass bei dem dargestellten Ausführungsbeispiel die zweite Anpressplatte 10 in axialer Richtung A, mit Bezug auf Figur 1 nach links, von der Druckplatte 8 durch die erwähnten vorgespannten Blattfedern weggedrängt wird. Dadurch werden die zweiten Reibbeläge 7 freigegeben. Die Vorspannung der entsprechenden Federmittel, wie insbesondere der Blattfedern, soll weiterhin gewährleisten, dass die Anlagefläche 19 stets axial in Richtung der radial äußeren Bereiche der zweiten Hebelfeder gedrängt wird.

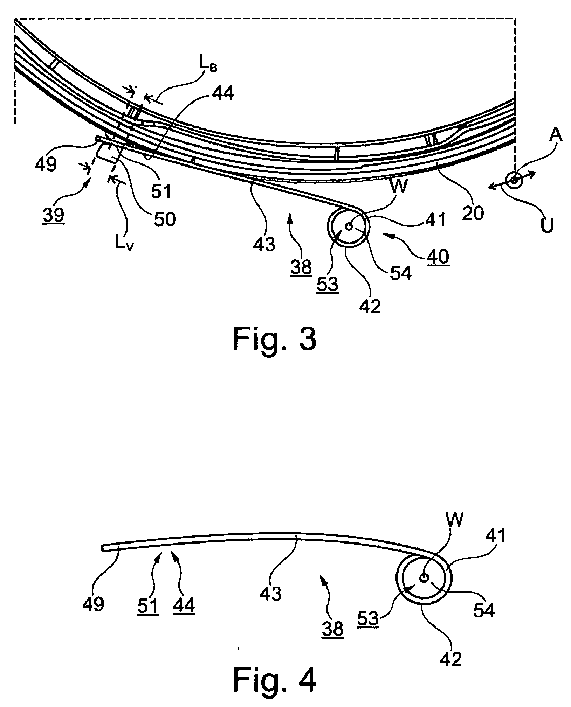

Der erste Rampenring 20 bildet einen Verstellring, der über die Rampeneinrichtung am Gehäusebauteil 12 in axialer Richtung A abgestützt ist. Die Rampeneinrichtung besitzt in Umfangsrichtung U verlaufende, sich in axialer Richtung A erhebende Rampen. In bekannter Weise können diese Rampen unmittelbar am ersten Rampenring 20 angeformt sein, und die mit den Rampen zusammenwirkenden Gegenrampen können in vorteilhafter Weise unmittelbar im Bereich des Gehäusebodens des Gehäusebauteils 12 eingebracht sein. In Umfangsrichtung U wird der erste Rampenring 20 von wenigstens einer, in den Figuren 3 bis 5 näher dargestellten Rollfeder 38 in Umfangsrichtung U bzw. Nachstellrichtung beaufschlagt.

Die erste Verschleißnachstelleinrichtung 21 umfasst weiterhin eine erste Sensoreinrichtung 23, die einen als zweiten Rampenring 24 ausgebildeten Sensorring aufweist, der in ähnlicher Weise, wie dies in Zusammenhang mit dem ersten Rampenring 20 beschrieben worden ist, über eine Rampeneinrichtung am Gehäuseboden des Gehäusebauteils 12 abgestützt ist und in Nachstellrichtung durch zumindest eine Feder, vorzugsweise zumindest eine Rollfeder 38, umfangsmäßig beaufschlagt ist. Der zweite Rampenring 24 ist in axialer Richtung A zwischen dem Gehäusebauteil 12 und den äußeren Bereichen der ersten Hebelfeder 16 angeordnet, und zwar auf radialer Höhe der Anlagefläche 19.

Die erste Sensoreinrichtung 23 besitzt weiterhin ein erstes Sensorelement 25, das vorzugsweise axial federnde Bereiche besitzt. Das erste Sensorelement 25 klemmt, sofern kein Verschleiß aufgetreten ist, den zweiten Rampenring 24 in axialer Richtung A ein, so dass dieser dann unverdrehbar gehalten ist. Das erste Sensorelement 25 besitzt erste Anschlagbereiche 26, die mit vom Zugmittel 17 getragenen, ersten Gegenanschlagbereichen 27 zusammenwirken können, und zwar insbesondere beim Auftreten von Verschleiß an den zweiten Reibbelägen 7. Die axiale Anordnung der ersten Anschlagbereiche 26 und der ersten Gegenanschlagbereiche 27, sowie die zwischen diesen beim Betätigen der zweiten Drehmomentübertragungseinrichtung 3 auftretenden Axialwege sind derart aufeinander abgestimmt, dass bei einer Schließung der zweiten Drehmomentübertragungseinrichtung 3 und fehlendem Verschleiß maximal lediglich eine Berührung zwischen den ersten Anschlagbereichen 26 und den ersten Gegenanschlagbereichen 27 erfolgen kann.

Sofern jedoch ein Verschleiß vorhanden ist, kommen die ersten Anschlagbereiche 26 an den ersten Gegenanschlagbereichen 27 zur Anlage bevor der vollständige Schließweg bzw. Einrückweg der zweiten Drehmomentübertragungseinrichtung 3 erreicht ist. Dadurch wird bewirkt, dass in Abhängigkeit des aufgetretenen Verschleißes eine axiale Verlagerung der ersten Anschlagbereiche 26 gegenüber zumindest dem zweiten Rampenring 24 erfolgt. Diese axiale Verlagerung bewirkt, dass der als zweiter Rampenring 24 ausgebildete Sensorring tendenzmäßig entlastet wird, und somit sich um einen Winkel verdrehen kann, der vom durch das erste Sensorelement 25 detektierten Verschleiß abhängig ist. Die dabei erfolgende axiale Verlagerung des zweiten Rampenrings 24 gegenüber dem Gehäusebauteil 12 wird durch die zwischen dem zweiten Rampenring 24 und diesem Gehäusebauteil 12 vorgesehene Rampeneinrichtung gewährleistet.

Beim Öffnen, also Ausrücken der zweiten Drehmomentübertragungseinrichtung 3, wird die zweite Hebelfeder 16 in eine winkelmäßige Lage zurückgedrängt, bei der die radial inneren, ersten Spitzen 22 der zweiten Hebelfeder 16 eine zumindest annähernd gleich bleibende bzw. konstante axiale Lage einnehmen. Aufgrund des mittels der ersten Sensoreinrichtung 23 erfolgten Verschleißausgleichs, der eine entsprechende Verlagerung der Anlagefläche 19 in axialer Richtung A, mit Bezug auf Figur 1 nach rechts, bewirkt, wird der Abstützring bzw. der erste Rampenring 20 beim Öffnen der zweiten Drehmomentübertragungseinrichtung 3 entlastet, so dass auch dieser eine Verdrehung erfährt, die aufgrund der zwischen dem Gehäusebauteil 12 und dem ersten Rampenring 20 vorhandenen Rampeneinrichtung eine entsprechende Verlagerung des ersten Rampenrings 20 in axialer Richtung A, mit Bezug auf Figur 1 nach rechts, bewirkt.

Das die ersten Anschlagbereiche 26 aufweisende erste Sensorelement 25 kann durch ein ringförmiges Bauteil gebildet sein, das über den Umfang betrachtet einzelne, vorzugsweise gleichmäßig verteilte, Befestigungen mit dem Gehäusebauteil 12 aufweist. Die zwischen diesen Befestigungen vorhandenen Bereiche des ringförmigen ersten Sensorelements 25 tragen die ersten Anschlagbereiche 26. Die in Umfangsrichtung U zwischen den Befestigungen vorgesehenen Bereiche des ersten Sensorelements 25 sind in axialer Richtung A elastisch bzw. federnd verformbar. Für manche Anwendungsfälle kann es zweckmäßig sein, wenn diese Bereiche auch einer Torsionsbeanspruchung ausgesetzt werden, die zumindest ein geringfügiges Verdrillen zumindest der Bereiche mit verringerter radialer Breite, die sich seitlich der ersten Anschlagbereiche 26 umfangsmäßig erstrecken, bewirkt.

Die erste Hebelfeder 15 der ersten Drehmomentübertragungseinrichtung 2 ist gegenüber der zweiten Hebelfeder 16 in axialer Richtung A auf der anderen Seite des Gehäusebauteils 12 vorgesehen. Die erste Hebelfeder 15 stützt sich mit einem radial äußeren Bereich an einem Abstützring bzw. an einem dritten Rampenring 28 ab. Der als Verstellring vorgesehene dritte Rampenring 28 ist in ähnlicher Weise, wie dies in Zusammenhang mit dem ersten Rampenring 20 beschrieben worden ist, gegenüber dem Gehäusebauteil 12 verdrehbar und an diesem über eine Rampeneinrichtung axial abgestützt. Der dritte Rampenring 28 bildet einen Bestandteil einer zweiten Verschleißnachstelleinrichtung 29, die zwischen den radialen Bereichen des Gehäusebauteils 12 und der ersten Hebelfeder 15 wirksam ist. Zwischen der ersten Anpressplatte 9 und der ersten Druckplatte 8 und/oder dem Gehäusebauteil 12 sind Drehmomentübertragungsmittel vorgesehen, die vorzugsweise durch an sich bekannte Blattfedern gebildet sind, die in axialer Richtung A derart vorgespannt sind, dass die erste Anpressplatte 9 in axialer Richtung A gegen die erste Hebelfeder 15 gedrückt wird. Die axiale Gesamtkraft, die auf die erste Hebelfeder 15 mit Bezug auf Figur 1 nach rechts einwirkt, ist dabei derart bemessen, dass während des Betriebs der Kupplungsvorrichtung 1 eine axiale Verlagerung bzw. Verschwenkung der ersten Hebelfeder 15 aufgrund zumindest von Resonanzerscheinungen und/oder Axialschwingungen bzw. Taumelschwingungen von zumindest einzelnen Bauteilen der Kupplungsvorrichtung 1 verhindert wird. Eventuell können zusätzlich zu den Blattfederelementen weitere Energiespeicher bzw. Federelemente vorgesehen sein, die auf die erste Anpressplatte 9 oder aber unmittelbar auf die erste Hebelfeder 15 einwirken.

Die zweite Verschleißnachstelleinrichtung 29 umfasst weiterhin eine zweite Sensoreinrichtung 30, die radial innerhalb und beabstandet vom dritten Rampenring 28 angeordnet ist. Die zweite Sensoreinrichtung 30 umfasst einen Sensorring in Form eines vierten Rampenrings 31, der ähnlich wie der zweite Rampenring 24 gegenüber dem Gehäusebauteil 12 verlagerbar und über eine Rampeneinrichtung abgestützt ist.

Weiterhin besitzt die zweite Sensoreinrichtung 30 ein zweites Sensorelement 32, das entweder mittelbar oder unmittelbar vom Gehäusebauteil 12 getragen ist. Das zweite Sensorelement 32 besitzt zumindest einen, vorzugsweise mehrere über den Umfang verteilte, zweite Anschlagbereiche 33, die mit zweiten Gegenanschlagbereichen 34 zumindest beim Auftreten von Verschleiß an den ersten Reibbelägen 6 der ersten Kupplungsscheibe 4 zusammenwirken. Die zweiten Gegenanschlagbereiche 34 können durch Elemente gebildet sein, die mit der ersten Hebelfeder 15 verbunden sind. Besonders vorteilhaft ist es, wenn die zweiten Gegenanschlagbereiche 34 durch einstückig mit der ersten Hebelfeder 15 ausgebildete Zungen gebildet sind.

Das zweite Sensorelement 32 besitzt Bereiche 35, die unter axialer Vorspannung mit weiteren Bereichen 36 des vierten Rampenrings 31 zusammenwirken. Durch die axiale Vorspannung zumindest der Bereiche 35 wird der vierte Rampenring 31 in axialer Richtung A eingespannt, so dass eine Verdrehung desselben zumindest bei fehlendem Verschleiß an den ersten Reibbelägen 6 vermieden wird. Dadurch wird eine unkontrollierte, nicht auf einen Verschleiß zurückzuführende Nachstellung der zweiten Verschleißnachstelleinrichtung 29 vermieden. Das zweite Sensorelement 32 kann ebenfalls durch ein ringförmiges Bauteil gebildet sein, das ähnlich ausgebildet mit dem Gehäusebauteil 12 verbunden und wirksam ist, wie dies in Zusammenhang mit dem ersten Sensorelement 25 beschrieben worden ist.

Der aus Figur 1 ersichtliche axiale Abstand zwischen den zweiten Anschlagbereichen 33 und den zweiten Gegenanschlagbereichen 34 ist derart bemessen, dass bei voll geschlossener, erster Drehmomentübertragungseinrichtung 2 und fehlendem Verschleiß an den ersten Reibbelägen 6 lediglich ein Touchieren bzw. eine leichte Anlage zwischen diesen Bereichen 33, 34 erfolgt, wodurch gewährleistet ist, dass der vierte Rampenring 31 gegen Rotation blockiert bleibt.

Das Schließen der der ersten Drehmomentübertragungseinrichtung 2 erfolgt in ähnlicher Weise wie dies in Verbindung mit der zweiten Drehmomentübertragungseinrichtung 3 beschrieben worden ist. Mit Bezug auf Figur 1 nach links wird mittels einer Betätigungseinrichtung eine Schließkraft im Bereich von radial inneren, zweiten Spitzen 37 der ersten Hebelfeder 15 eingeleitet. Diese Schließkraft wird allmählich aufgebaut, und zwar so lange, bis die auf die erste Anpressplatte 9 ausgeübte Axialkraft ausreicht, um das vom Motor abgegebene Drehmoment über die erste Kupplungsscheibe 4 an das Getriebe weiterzuleiten. Die maximale Anpresskraft kann dabei zumindest einen konstanten Wert aufweisen. Es kann jedoch auch vorteilhaft sein, in Abhängigkeit des Betriebszustands des Motors und des dabei abgegebenen Drehmoments diese Schließkraft entsprechend anzupassen. Dies bedeutet, dass, wenn der Motor lediglich 50 % seines Nominaldrehmoments abgibt, die Anpresskraft entsprechend reduziert werden kann. Eine ähnliche Betätigung ist auch für die zweite Drehmomentübertragungseinrichtung 3 möglich.

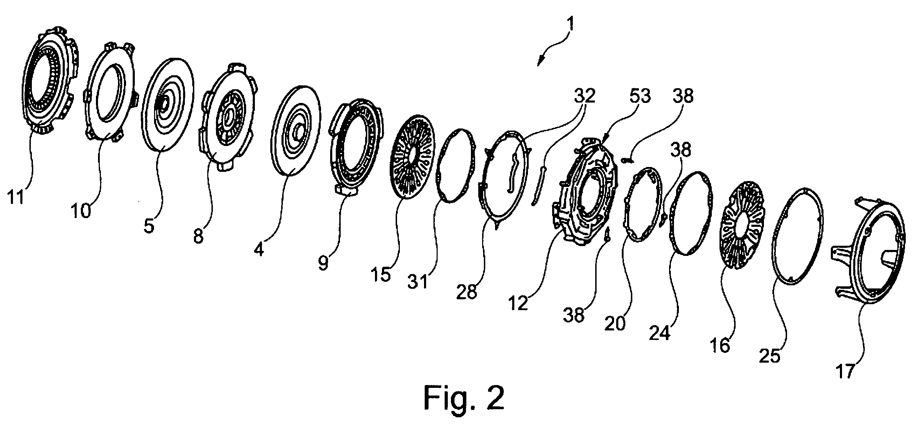

Aus der in Figur 2 dargestellten Explosionsansicht der Kupplungsvorrichtung 1 sind einige Ausgestaltungsmerkmale einer solchen Kupplungsvorrichtung 1 zu entnehmen. Die entsprechenden Bauteile sind mit den Bezugszeichen der vorangegangenen Beschreibung versehen. Lediglich angedeutet sind die drei über den Umfang verteilten Rollfedern 38, die einerseits in entsprechenden Befestigungsbereichen 53 am Gehäusebauteil 12 befestigt sind und andererseits mit dem zweiten Rampenring 24 verbunden sind. Es versteht sich von selbst, dass alternativ oder zusätzlich sowohl der erste Rampenring 20 als auch der dritte Rampenring 28 als auch der vierte Rampenring 31 zur Verdrehung von den vorgeschlagenen Rollfedern 38 unterstützt werden können.

In Figur 3 ist ein Rampenring der Kupplungsvorrichtung 1 mit einer einzelnen, daran angehängten Rollfeder 38 dargestellt. Exemplarisch ist hierbei der erste Rampenring 20 dargestellt, wobei die Rollfeder 38 gleichermaßen am zweiten, dritten oder vierten Rampenring 24, 28, 31 angehängt sein kann. Ferner ist in Figur 4 die Rollfeder 38 im vorgespannten Zustand alleine, das heißt ohne den Rampenring, dargestellt.

Mittels einer rampenringseitigen Befestigung 39 ist die Rollfeder 38 am Rampenring 20 befestigt. Hierzu weist der Rampenring 20 beispielsweise in seinem Außenumfang einen, vorzugsweise im Wesentlichen hakenförmigen, Vorsprung 50 auf, an dem die Rollfeder 38 mittels einer entsprechenden Befestigungsöffnung 51 angehängt ist. Anstelle des Vorsprungs 50 ist es beispielsweise jedoch auch möglich, dass der Rampenring 20 eine Aussparung aufweist, in den die Rollfeder 38 mittels eines umgebogenen Endes eingehängt ist. Auch andere Arten zur Befestigung, insbesondere zur lösbaren Befestigung, der Rollfeder 38 am Rampenring 20 sind möglich.

Ferner ist die Rollfeder 38 mittels einer gehäusebauteilseitigen Befestigung 40 am Gehäusebauteil 12 oder an einem anderen Bauteil des Kupplungsgehäuses befestigt. Hierzu weist das Gehäusebauteil 12 oder das andere Bauteil des Kupplungsgehäuses einen speziell gestalteten Befestigungsbereich 53 auf. Der Befestigungsbereich 53 beinhaltet beispielsweise eine Vertiefung, in die ein Windungsabschnitt 41 der Rollfeder 38 eingelegt ist und mittels eines Niets 54, insbesondere eines Hammerkopfniets, eines Stufenbolzens oder einer Schraube mit dem Gehäusebauteil 12 oder dem anderen Bauteil des Kupplungsgehäuses verbunden ist. Zur Verbesserung der Führung kann die Rollfeder 38 beispielsweise innerhalb ihres Windungsabschnitts 41 eine Federhülse oder dergleichen aufweisen. Alternativ ist es jedoch auch möglich, die Rollfeder 38 schwimmend im Befestigungsbereich 53 zu lagern, das heißt ohne Befestigung mittels des Niets 54, des Stufenbolzens oder der Schraube.

Der Windungsabschnitt 41 umfasst eine oder mehrere Federwindungen 42, die um eine Wickelachse W gewickelt sind und die im Bereich der gehäusebauteilseitigen Befestigung 40 der Rollfeder 38 vorgesehen sind. Der Windungsabschnitt 41 geht mit seiner radial am weitesten außen liegenden Federwindung 42 in einen Bandabschnitt 43 der Rollfeder 38 über. Der Bandabschnitt 43 ist im Wesentlichen nicht aufgewickelt, weist aber eine Vorspannung in Aufwickelrichtung auf. Mittels seines freien Endes 49 ist der Bandabschnitt 43 rampenringseitig befestigt. Hierzu ist das freie Ende 49 mittels der Befestigungsöffnung 51 am hakenförmigen Vorsprung 50 des Rampenrings 20 angehängt oder in die Aussparung des Rampenrings 20 eingehängt.

Insgesamt ist die Rollfeder 38 bezüglich des Rampenrings 20 derart angeordnet, dass in radialer Richtung der Kupplungsvorrichtung 1 der Bandabschnitt 43 der Rollfeder 38 zwischen dem Windungsabschnitt 41 der Rollfeder 38 und dem Rampenring 20 angeordnet ist. Aufgrund ihrer Vorspannung in Aufwickelrichtung tendiert die Rollfeder 38 dazu, sich mittels einer rechtwinklig zum Bandabschnitt 43 wirkenden Aushakkraft von der rampenringseitigen Befestigung 39 bzw. vom Rampenring 20 zu lösen. Neben der Befestigungsöffnung 51, durch die das freie Ende 49 des Bandabschnitts 43 am rampenringseitigen Vorsprung 50 eingehängt ist, weist das freie Ende 49 des Bandabschnitts 43 vorzugsweise eine Montagewerkzeugöffnung 52 auf.

Beim Einbau wird die Rollfeder 38 üblicherweise zuerst gehäuseseitig befestigt. Da die Rollfeder 38 aufgrund ihrer Vorspannung dazu tendiert, sich nahezu vollständig über den Windungsabschnitt 41 und den Bandabschnitt 43 aufzurollen, kann in die Montagewerkzeugöffnung 52 ein Montagewerkzeug eingehängt werden, um die Rollfeder 38 zumindest teilweise abzuwickeln und die Befestigungsöffnung 51 am rampenringseitigen Vorsprung 50 anzuhängen. Hierzu ist die Montagewerkzeugöffnung 52 vorzugsweise weiter vom Windungsabschnitt 41 der Rollfeder 38 entfernt vorgesehen als die Befestigungsöffnung 51.

Im dargestellten Ausführungsbeispiel ist ferner eine Einhängsicherung 44 zwischen dem Rampenring 20 und der Rollfeder 38 vorgesehen. Genauer gesagt ist die Einhängsicherung 44 in einem Bereich einer Befestigungsöffnung 51 der Rollfeder 38 vorgesehen, wobei die Einhängsicherung 44 die Befestigungsöffnung 51 vorzugsweise in Umfangsrichtung U der Kupplungsvorrichtung 1 begrenzt. Die Einhängsicherung 44 verhindert nicht nur das Aushängen der Rollfeder 38 aufgrund ihrer Vorspannung in Aufwickelrichtung, sondern verhindert insbesondere ein Lösen der Rollfeder 38 vom Rampenring 20 beim kurzzeitigen Blockieren oder Verklemmen der Rollfeder 38 oder bei Drehzahlschwankungen im Betrieb der Kupplungsvorrichtung 1.

Vorzugsweise ist die Einhängsicherung 44 elastisch ausgebildet ist, so dass sie nach der Montage der Rollfeder 38 am Rampenring 20, während der die Einhängsicherung 44 in ihrem elastischen Bereich verformt worden ist, zumindest teilweise wieder in ihren Ausgangszustand zurückkehrt. Hierfür ist die Einhängsicherung 44 vorzugsweise als Schnappsicherung ausgebildet, die in ihren Ausgangszustand zurückschnappt, nachdem die Rollfeder 38 rampenringseitig montiert worden ist.

Ferner ist im dargestellten Ausführungsbeispiel die Einhängsicherung 44 rollfederseitig vorgesehen ist. Insbesondere ist die Einhängsicherung 44 einteilig mit der Rollfeder 38, genauer gesagt mit der übrigen Rollfeder 38, ausgebildet ist. Wie die gesamte Rollfeder 38 ist auch die Einhängsicherung 44 vorzugsweise aus elastischem Bandmaterial, insbesondere vorzugsweise aus Stahl, hergestellt.

Die Einhängsicherung 44 weist eine Zunge 45 auf, die einteilig mit dem Bandabschnitt 43 der Rollfeder 38 ausgebildet ist. Wenn die Rollfeder 38 aus mehreren, beispielsweise aus zwei Lagen Bandmaterial besteht, die stoffschlüssig miteinander verbunden sind, ist es möglich, dass die Zunge 45 ebenfalls mehrlagig, beispielsweise zweilagig ausgebildet ist. Jedoch ist es auch möglich, dass die Zunge 45 nur aus einer einzelnen der Lagen Bandmaterial ausgebildet ist.

Im dargestellten Ausführungsbeispiel erstreckt sich die Zunge 45 in Umfangsrichtung U der Kupplungsvorrichtung 1, das heißt in Längsrichtung des Bandabschnitts 43. In axialer Richtung A der Kupplungsvorrichtung, das heißt in Querrichtung des Bandabschnitts 43, sind auf beiden gegenüberliegenden Seiten der Zunge Schlitze 48 ausgebildet, die die Zunge 45 von der übrigen Rollfeder 38, genauer gesagt vom Bandabschnitt 43 der Rollfeder 38 trennen.

An ihrem freien Ende weißt die Zunge 45 eine Kante 46 auf, die die Befestigungsöffnung 51 der Rollfeder 38 in Umfangsrichtung U der Kupplungsvorrichtung 1 begrenzt, so dass die Einhängsicherung 44 in Umfangsrichtung U der Kupplungsvorrichtung 1 zwischen der Befestigungsöffnung 51 und dem Windungsabschnitt 41 der Rollfeder 38 angeordnet ist. In Umfangsrichtung U der Kante 46 gegenüberliegend ist ein Knickbereich 47 vorgesehen, in dem die übrige Rollfeder 38 in die Zunge 45 übergeht. Durch den Knickbereich 47 schnappt die Zunge 45 elastisch in ihren Ausgangszustand zurück, nachdem der hakenförmige Vorsprung 50 die Befestigungsöffnung 51 passiert hat.

Obwohl dies im in den Figuren 1 bis 5 dargestellten Ausführungsbeispiel nicht gezeigt ist, ist es auch möglich, dass die Zunge 45 nicht in Unfangsrichtung U der Kupplungsvorrichtung 1 in die übrige Rollfeder 38 übergeht, sondern dass der Knickbereich 47 in axialer Richtung A der Kupplungsvorrichtung 1, das heißt in Querrichtung der Rollfeder 38, zwischen der Zunge 45 und der übrigen Rollfeder 38 ausgebildet ist. Somit erstreckt sich die Zunge 45 in axialer Richtung A der Kupplungsvorrichtung, wobei der Schlitz 48, der einen Bereich des freien Endes der Zunge 45 von der übrigen Rollfeder 38 trennt, im Wesentlichen L-förmig ausgebildet ist, das heißt einen Abschnitt aufweist, der in Längsrichtung der Rollfeder 38 verläuft, und einen Abschnitt aufweist, der in Querrichtung der Rollfeder 38 verläuft.

Ebenso ist es möglich, dass die Einhängsicherung 44 zwei Zungen 45 aufweist. Diese beiden Zungen 45 weisen beispielsweise in Querrichtung der Rollfeder 38, das heißt in axialer Richtung A der Kupplungsvorrichtung 1, jeweils die halbe Breite der zuvor erläuterten, einzelnen Zunge 45 auf. Jede der beiden Zungen 45 erstreckt sich in Querrichtung der Rollfeder 38 und weist einen Knickbereich 47 auf, in dem die jeweilige Zunge 45 in Querrichtung der Rollfeder in die übrige Rollfeder, genauer gesagt in den Bandabschnitt der Rollfeder 38, übergeht. Bereiche freier Enden der beiden Zungen 45 liegen einander gegenüber und sind durch den Basisabschnitt eines im Wesentlichen T-förmigen Schlitzes 48 getrennt.

Allen Ausführungsbeispielen ist es gemeinsam, dass die Länge L_{B} der Befestigungsöffnung 51 kleiner als die maximale Länge L_{V} des hakenförmigen Vorsprungs 50 in Umfangsrichtung U der Kupplungsvorrichtung 1 ist. Somit verhindert die kurz ausgebildete Befestigungsöffnung 51 in Verbindung mit der sich im Ausgangszustand befindenden Einhängsicherung 44, dass sich die Rollfeder 38 im Betrieb der Kupplungsvorrichtung 1 vom rampenringseitigen, hakenförmigen Vorsprung 50 aushängt. Auf der anderen Seite ist die Gesamtlänge L_{ges} der Befestigungsöffnung 51 und der Einhängsicherung 44 zumindest gleich, vorzugsweise größer als die maximale Länge L_{V} des hakenförmigen Vorsprungs 50 in Umfangsrichtung U der Kupplungsvorrichtung 1. Somit ist es möglich, bei der Montage der Kupplungsvorrichtung 1 die Rollfeder 38 auf einfache Art und Weise am rampenringseitigen, hakenförmigen Vorsprung 50 einzuhängen, wobei die Einhängsicherung 44 beim Einhängen elastisch verformt wird, und wieder in ihren Ausgangszustand zurückkehrt, nachdem der hakenförmige Vorsprung 50 die Befestigungsöffnung 51 passiert hat.

Die vorangegangenen Ausführungsbeispiele betreffen eine Kupplungsvorrichtung 1 mit zumindest einer Drehmomentübertragungseinrichtung 2, 3, die zumindest eine mit einem Gehäusebauteil 12 drehfest verbundene Druckplatte 8, eine drehfest und in axialer Richtung A gegenüber der Druckplatte 8 verlagerbare Anpressplatte 9, 10 und eine reibschlüssig zwischen der Druckplatte 8 und der Anpressplatte 9, 10 verspannbare Kupplungsscheibe 4, 5 aufweist, und mit zumindest einer Verschleißnachstelleinrichtung 21, 29, die zumindest einen in Umfangsrichtung mittels zumindest einer gewickelten Rollfeder 38 verdrehbaren Rampenring 20, 24, 28, 31 zur Sensierung und zum Ausgleich eines verschleißbedingten Axialspiels zwischen dem Gehäusebauteil 12 und der Anpressplatte 9, 10 aufweist, wobei die Rollfeder 38 einerseits rampenringseitig und andererseits gehäusebauteilseitig montiert ist, wobei zwischen dem Rampenring 20, 24, 28, 31 und der Rollfeder 38 eine Einhängsicherung 44 vorgesehen ist.

Darüber hinaus betreffen die vorangegangenen Ausführungsbeispiele eine Rollfeder 38 mit einem Windungsabschnitt 41, der zumindest eine Federwindung 42 aufweist und in einen Bandabschnitt 43 übergeht, wobei der Bandabschnitt 43 im Bereich eines freien Endes 49 zumindest eine Befestigungsöffnung 51 aufweist, in die ein im Wesentlichen hakenförmiger Vorsprung 50 einhängbar ist und durch eine im Wesentlichen zungenförmige Einhängsicherung 44 gegen Aushängen sicherbar ist. Insbesondere ist die Rollfeder 38 für eine Verschleißnachstelleinrichtung 21, 29 einer Kupplungsvorrichtung 1 der vorgenannten Art geeignet und ausgebildet.

### Bezugszeichenliste

- 1: Kupplungsvorrichtung
- 2: Drehmomentübertragungseinrichtung
- 3: Drehmomentübertragungseinrichtung
- 4: Kupplungsscheibe
- 5: Kupplungsscheibe
- 6: Reibbelag
- 7: Reibbelag
- 8: Druckplatte
- 8a: Lagerung
- 9: Anpressplatte
- 10: Anpressplatte
- 11: Antriebskorb
- 12: Gehäusebauteil
- 13: Hebelelement
- 14: Hebelelement
- 15: Hebelfeder
- 16: Hebelfeder
- 17: Zugmittel
- 18: abgewandtes Ende
- 19: Anlagefläche
- 20: Rampenring
- 21: Verschleißnachstelleinrichtung
- 22: radial innere Spitzen
- 23: Sensoreinrichtung
- 24: Rampenring
- 25: Sensorelement
- 26: Anschlagbereich
- 27: Gegenanschlagbereich
- 28: Rampenring
- 29: Verschleißnachstelleinrichtung
- 30: Sensoreinrichtung
- 31: Rampenring
- 32: Sensorelement
- 33: Anschlagbereich
- 34: Gegenanschlagbereich
- 35: Bereich
- 36: Bereich
- 37: radial innere Spitzen
- 38: Rollfeder
- 39: rampenringseitige Befestigung
- 40: gehäusebauteilseitige Befestigung
- 41: Windungsabschnitt
- 42: Federwindung
- 43: Bandabschnitt
- 44: Einhängsicherung
- 45: Zunge
- 46: Kante
- 47: Knickbereich
- 48: Schlitz
- 49: freies Ende
- 50: Vorsprung
- 51: Befestigungsöffnung
- 52: Montagewerkzeugöffnung
- 53: Befestigungsbereich
- 54: Niet
- A: axiale Richtung
- U: Umfangsrichtung
- W: Wickelachse
- L_{B}: Länge der Befestigungsöffnung
- L_{V}: maximale Länge des hakenförmigen Vorsprungs
- L_{ges}: Gesamtlänge

## Patentansprüche

1. Kupplungsvorrichtung (1) mit zumindest einer Drehmomentübertragungseinrichtung (2, 3), die zumindest eine mit einem Gehäusebauteil (12) drehfest verbundene Druckplatte (8), eine drehfest und in axialer Richtung (A) gegenüber der Druckplatte (8) verlagerbare Anpressplatte (9, 10) und eine reibschlüssig zwischen der Druckplatte (8) und der Anpressplatte (9, 10) verspannbare Kupplungsscheibe (4, 5) aufweist, und mit zumindest einer Verschleißnachstelleinrichtung (21, 29), die zumindest einen in Umfangsrichtung mittels zumindest einer gewickelten Rollfeder (38) verdrehbaren Rampenring (20, 24, 28, 31) zur Sensierung und zum Ausgleich eines verschleißbedingten Axialspiels zwischen dem Gehäusebauteil (12) und der Anpressplatte (9, 10) aufweist, wobei die Rollfeder (38) einerseits rampenringseitig und andererseits gehäusebauteilseitig montiert ist, wobei zwischen dem Rampenring (20, 24, 28, 31) und der Rollfeder (38) eine Einhängsicherung (44) vorgesehen ist, wobei die Einhängsicherung (44) rollfederseitig vorgesehen ist, **dadurch gekennzeichnet, dass** die Einhängsicherung (44) in einem Bereich einer Befestigungsöffnung (51) der Rollfeder (38) vorgesehen ist und die Rollfeder (38) mittels der Befestigungsöffnung (51) an einem rampenringseitigen Vorsprung (50) eingehängt ist.

2. Kupplungsvorrichtung (1) nach Anspruch 1, wobei die Einhängsicherung (44) elastisch ausgebildet ist.

3. Kupplungsvorrichtung (1) nach Anspruch 1 oder 2, wobei die Einhängsicherung (44) als Schnappsicherung ausgebildet, und vorzugsweise in ihren Ausgangszustand zurückschnappt, nachdem die Rollfeder (38) rampenringseitig montiert worden ist.

4. Kupplungsvorrichtung (1) nach zumindest einem der Ansprüche 1 bis 3, wobei die Einhängsicherung (44) einteilig mit der Rollfeder (38) ausgebildet ist.

5. Kupplungsvorrichtung (1) nach zumindest einem der Ansprüche 1 bis 4, wobei die Einhängsicherung (44) die Befestigungsöffnung (51) in Umfangsrichtung (U) der Kupplungsvorrichtung (1) begrenzt, und wobei ein freies Ende (49) eines Bandabschnitts (43) der Rollfeder (38) mittels der Befestigungsöffnung (51) am rampenringseitigen Vorsprung (50), der im Wesentlichen hakenförmig ausgebildet ist, eingehängt ist.

6. Kupplungsvorrichtung (1) nach Anspruch 5, wobei die Einhängsicherung (44) zwischen einem gehäusebauteilseitig montierten Windungsabschnitt (41) der Rollfeder (38) und der Befestigungsöffnung (51) angeordnet ist.

7. Kupplungsvorrichtung (1) nach Anspruch 5 oder 6, wobei die Länge (L_{B}) der Befestigungsöffnung (51) kleiner als die maximale Länge (L_{V}) des hakenförmigen Vorsprungs (50) in Umfangsrichtung (U) der Kupplungsvorrichtung (1) ist, und wobei die Gesamtlänge (L_{ges}) der Befestigungsöffnung (51) und der Einhängsicherung (44) zumindest gleich, vorzugsweise größer als die maximale Länge (L_{V}) des hakenförmigen Vorsprungs (50) in Umfangsrichtung (U) der Kupplungsvorrichtung (1) ist.

8. Kupplungsvorrichtung (1) nach zumindest einem der Ansprüche 5 bis 7, wobei die Einhängsicherung (44) zumindest eine Zunge (45) aufweist, die einteilig mit dem Bandabschnitt (43) der Rollfeder (38) ausgebildet ist, und die eine Kante (46) aufweist, die die Befestigungsöffnung (51) der Rollfeder (38) in Umfangsrichtung (U) der Kupplungsvorrichtung (1) begrenzt.

9. Kupplungsvorrichtung (1) nach Anspruch 8, wobei zwischen der Zunge (45) und der übrigen Rollfeder (38), vorzugsweise in Umfangsrichtung (U) oder in axialer Richtung (A), ein Knickbereich (47) vorgesehen ist, durch den die Zunge (45), vorzugsweise elastisch, in ihren Ausgangszustand zurückschnappt, nachdem der hakenförmige Vorsprung (50) die Befestigungsöffnung (51) passiert hat.

10. Rollfeder (38) für eine Verschleißnachstelleinrichtung (21, 29) einer Kupplungsvorrichtung (1) nach zumindest einem der Ansprüche 1 bis 9, mit einem Windungsabschnitt (41), der zumindest eine Federwindung (42) aufweist und in einen Bandabschnitt (43) übergeht, **dadurch gekennzeichnet, daß** der Bandabschnitt (43) im Bereich eines freien Endes (49) zumindest eine Befestigungsöffnung (51) aufweist, in die ein im Wesentlichen hakenförmiger Vorsprung (50) einhängbar ist und durch eine im Wesentlichen zungenförmige Einhängsicherung (44) gegen Aushängen sicherbar ist.

## Claims

1. Clutch device (1) having at least one torque-transmitting device (2, 3) which has at least one thrust plate (8) connected rotationally conjointly to a housing component (12), a pressing plate (9, 10) which is rotationally fixed and which is displaceable in an axial direction (A) relative to the thrust plate (8), and a clutch disk (4, 5) which can be braced with frictionally engaging action between the thrust plate (8) and the pressing plate (9, 10), and having at least one wear-compensating readjustment device (21, 29) which has at least one ramp ring (20, 24, 28, 31) which can be rotated in a circumferential direction by way of at least one coiled rolling spring (38) and which serves for the detection and compensation of a wear-induced axial play between the housing component (12) and the pressing plate (9, 10), wherein the rolling spring (38) is installed at one side on the ramp ring and at the other side on the housing component, wherein a hook-in securing means (44) is provided between the ramp ring (20, 24, 28, 31) and the rolling spring (38), wherein the hook-in securing means (44) is provided on the rolling spring, **characterized in that** the hook-in securing means (44) is provided in a region of a fastening opening (51) of the rolling spring (38), and the rolling spring (38) is hooked by way of the fastening opening (51) onto a projection (50) on the ramp ring.

2. Clutch device (1) according to Claim 1, wherein the hook-in securing means (44) is of elastic form.

3. Clutch device (1) according to Claim 1 or 2, wherein the hook-in securing means (44) is in the form of a snap-action securing means, and preferably snaps back into its initial state after the rolling spring (38) has been installed on the ramp ring.

4. Clutch device (1) according to at least one of Claims 1 to 3, wherein the hook-in securing means (44) is formed integrally with the rolling spring (38).

5. Clutch device (1) according to at least one of Claims 1 to 4, wherein the hook-in securing means (44) delimits the fastening opening (51) in a circumferential direction (U) of the coupling device (1), and wherein a free end (49) of a band section (43) of the rolling spring (38) is hooked by way of the fastening opening (51) onto the projection (50), which is of substantially hook-like form, on the ramp ring.

6. Clutch device (1) according to Claim 5, wherein the hook-in securing means (44) is arranged between a coil section (41), installed on the housing component, of the rolling spring (38) and the fastening opening (51).

7. Clutch device (1) according to Claim 5 or 6, wherein the length (L_{B}) of the fastening opening (51) is smaller than the maximum length (L_{V}) of the hook-like projection (50) in the circumferential direction (U) of the clutch device (1), and wherein the total length (L_{ges}) of the fastening opening (51) and of the hook-in securing means (44) is at least equal to, preferably greater than, the maximum length (L_{V}) of the hook-like projection (50) in the circumferential direction (U) of the clutch device (1).

8. Clutch device (1) according to at least one of Claims 5 to 7, wherein the hook-in securing means (44) has at least one tongue (45) which is formed integrally with the band section (43) of the rolling spring (38) and which has an edge (46) which delimits the fastening opening (51) of the rolling spring (38) in the circumferential direction (U) of the clutch device (1).

9. Clutch device (1) according to Claim 8, wherein, between the tongue (45) and the rest of the rolling spring (38), preferably in the circumferential direction (U) or in the axial direction (A), there is provided a bending region (47) by way of which the tongue (45) snaps back, preferably elastically, into its initial state after the hook-like projection (50) has passed the fastening opening (51).

10. Rolling spring (38) for a wear-compensating readjustment device (21, 29) of a clutch device (1) according to at least one of Claims 1 to 9, having a coil section (41) which has at least one spring coil (42) and which transitions into a band section (43), **characterized in that** the band section (43) has, in the region of a free end (49), at least one fastening opening (51) into which a substantially hook-like projection (50) can be hooked and secured against becoming unhooked by way of a substantially tongue-like hook-in securing means (44).

## Revendications

1. Dispositif d'embrayage (1) comprenant au moins un dispositif de transfert de couple (2, 3) qui présente au moins une plaque de pression (8) connectée de manière solidaire en rotation à un composant de boîtier (12), une plaque de pressage (9, 10) déplaçable de manière solidaire en rotation et dans la direction axiale (A) par rapport à la plaque de pression (8) et un disque d'embrayage (4, 5) pouvant être serré par engagement par friction entre la plaque de pression (8) et la plaque de pressage (9, 10), et comprenant au moins un dispositif de rattrapage de l'usure (21, 29) qui présente au moins une bague de rampe (20, 24, 28, 31) pouvant tourner dans la direction périphérique au moyen d'au moins un ressort à rouleau enroulé (38) pour détecter et compenser un jeu axial provoqué par l'usure entre le composant de boîtier (12) et la plaque de pressage (9, 10), le ressort à rouleau (38) étant monté d'une part du côté de la bague de rampe et d'autre part du côté du composant de boîtier, une fixation d'accrochage (44) étant prévue entre la bague de rampe (20, 24, 28, 31) et le ressort à rouleau (38), la fixation d'accrochage (44) étant prévue du côté du ressort à rouleau, **caractérisé en ce que** la fixation d'accrochage (44) est prévue dans une région d'une ouverture de fixation (51) du ressort à rouleau (38) et le ressort à rouleau (38) étant accroché au moyen de l'ouverture de fixation (51) à une saillie (50) du côté de la bague de rampe.

2. Dispositif d'embrayage (1) selon la revendication 1, dans lequel la fixation d'accrochage (44) est réalisée sous forme élastique.

3. Dispositif d'embrayage (1) selon la revendication 1 ou 2, dans lequel la fixation d'accrochage (44) est réalisée sous forme de fixation par encliquetage et de préférence revient par encliquetage dans son état de départ après que le ressort à rouleau (38) a été monté du côté de la bague de rampe.

4. Dispositif d'embrayage (1) selon au moins l'une quelconque des revendications 1 à 3, dans lequel la fixation d'accrochage (44) est réalisée d'une seule pièce avec le ressort à rouleau (38).

5. Dispositif d'embrayage (1) selon au moins l'une quelconque des revendications 1 à 4, dans lequel la fixation d'accrochage (44) limite l'ouverture de fixation (51) dans la direction périphérique (U) du dispositif d'embrayage (1), et dans lequel une extrémité libre (49) d'une portion de bande (43) du ressort à rouleau (38) est accrochée au moyen de l'ouverture de fixation (51) à la saillie (50) du côté de la bague de rampe qui est réalisée essentiellement en forme de crochet.

6. Dispositif d'embrayage (1) selon la revendication 5, dans lequel la fixation d'accrochage (44) est disposée entre une portion d'enroulement (41) du ressort à rouleau (38) montée du côté du composant de boîtier et l'ouverture de fixation (51).

7. Dispositif d'embrayage (1) selon la revendication 5 ou 6, dans lequel la longueur (L_{B}) de l'ouverture de fixation (51) est inférieure à la longueur maximale (L_{V}) de la saillie en forme de crochet (50) dans la direction périphérique (U) du dispositif d'embrayage (1), et la longueur totale (L_{ges}) de l'ouverture de fixation (51) et de la fixation d'accrochage (44) est au moins identique, de préférence supérieure, à la longueur maximale (L_{V}) de la saillie en forme de crochet (50) dans la direction périphérique (U) du dispositif d'embrayage (1).

8. Dispositif d'embrayage (1) selon au moins l'une quelconque des revendications 5 à 7, dans lequel la fixation d'accrochage (44) présente au moins une langue (45) qui est réalisée d'une seule pièce avec la portion de bande (43) du ressort à rouleau (38), et qui présente une arête (46) qui limite l'ouverture de fixation (51) du ressort à rouleau (38) dans la direction périphérique (U) du dispositif d'embrayage (1).

9. Dispositif d'embrayage (1) selon la revendication 8, dans lequel, entre la langue (45) et le reste du ressort à rouleau (38), de préférence dans la direction périphérique (U) ou dans la direction axiale (A), est prévue une région d'inflexion (47) par laquelle la langue (45) revient par encliquetage, de préférence élastiquement, dans son état de départ, après que la saillie en forme de crochet (50) a passé l'ouverture de fixation (51).

10. Ressort à rouleau (38) pour un dispositif de rattrapage de l'usure (21, 29) d'un dispositif d'embrayage (1) selon au moins l'une quelconque des revendications 1 à 9, comprenant une portion d'enroulement (41) qui présente au moins un enroulement de ressort (42) et qui se prolonge par une portion de bande (43), **caractérisé en ce que** la portion de bande (43), dans la région d'une extrémité libre (49), présente au moins une ouverture de fixation (51) dans laquelle une saillie (50) essentiellement en forme de crochet peut être accrochée et peut être fixée contre un décrochage par une fixation d'accrochage (44) essentiellement en forme de langue.
